# EUROPEAN PATENT SPECIFICATION

(11) **EP 2 553 225 B1**
(45) Date of publication and mention of the grant of the patent: **31.07.2013**
(21) Application number: 11717739.4
(22) Date of filing: 08.03.2011
(51) Int. Cl.: F01N 3/021, F01N 3/037, F01N 9/00

(54) **EXHAUST GAS CONTROL APPARATUS AND METHOD FOR INTERNAL COMBUSTION ENGINE**
ABGASREGELUNGSVORRICHTUNG UND VERFAHREN FÜR BRENNKRAFTMASCHINEN
DISPOSITIF ET PROCÉDÉ DE CONTRÔLE DE GAZ D'ÉCHAPPEMENT POUR MOTEUR À COMBUSTION INTERNE

(30) Priority: 29.03.2010 JP 2010075836
(43) Date of publication of application: 06.02.2013
(73) Proprietor: TOYOTA JIDOSHA KABUSHIKI KAISHA, Toyota-shi, Aichi-ken, 471-8571 (JP)
(72) Inventor: ITO, Hiroshi, Toyota-shi, Aichi-ken 471-8571 (JP)
(74) Representative: Smith, Samuel Leonard
(86) International application number: PCT/IB2011/000615
(87) International publication number: WO 2011/121411

(56) References cited:
- WO-A2-2004/011783
- JP-A- 2006 226 191

## Description

### BACKGROUND OF THE INVENTION

### 1. Field of Invention

The invention relates to an exhaust gas control apparatus for an internal combustion engine, and an exhaust gas control method for an internal combustion engine.

### 2. Description of the Related Art

In internal combustion engines such as diesel engines, in order to remove PM (particulate matter) in exhaust gas discharged from the engine, a diesel particulate filter (hereinafter, referred to as "DPF") that traps and collects PM is disposed in an exhaust passage. The PM contains soot, a soluble organic fraction (SOF) and sulfur oxide (sulfate), and is trapped in the DPF.

PM in the exhaust gas discharged from the internal combustion engine may be derived from a lubricant component for the internal combustion engine. PM having a particle diameter of 50 nm or less is called a nanoparticle. Due to its small size of 50 nm or less, the nanoparticle is sometimes not trapped in the DPF but passes through the DPF.

Therefore, in order to reduce the occurrence of a situation where the nanoparticles pass through pores of the DPF without being trapped in the DPF, there has been proposed a technology (e.g., see Japanese Patent Application Publication No. 2006-226191 (JP-A-2006-226191)) in which exhaust gas is introduced into a bypass passage so as to increase the retention time of nanoparticles in the exhaust gas, whereby the nanoparticles are allowed to aggregate to such an increased size that the particles are trapped in a DPF, or are allowed to adsorb onto and aggregate with PM other than nanoparticles so as to gain such an increased size that the particles are efficiently trapped in a DPF disposed on the downstream side. This technology described in Japanese Patent Application Publication No. 2006-226191 (JP-A-2006-226191) requires the bypass passage, and provision of the bypass passage causes problems such as an increase in the number of components, reduction in efficiency in mounting an exhaust gas control apparatus in a vehicle, and an increase in cost.

### SUMMARY OF INVENTION

The invention provides an exhaust gas control apparatus and an exhaust gas control method for an internal combustion engine with which nanoparticles are trapped in a filter.

A first aspect of the invention relates to an exhaust gas control apparatus for an internal combustion engine, which includes: a filter that is provided in an exhaust passage of an internal combustion engine and that traps PM in exhaust gas discharged from the internal combustion engine; PM accumulated amount estimation means for estimating an amount of PM accumulated in the filter; and first control means for raising a temperature of the exhaust gas that flows through the filter if the amount of PM accumulated in the filter, estimated by the PM accumulated amount estimation means, is less than or equal to a predetermined amount. The predetermined amount is set such that if the estimated amount of PM accumulated in the filter is less than or equal to the predetermined amount, it is determined that a porosity of pores of the filter is so high that a likelihood that a nanoparticle included in the PM passes through the filter is high, and if the estimated amount of PM accumulated in the filter exceeds the predetermined amount, it is determined that the porosity is so low that the likelihood that the nanoparticle passes through the filter is low.

The foregoing predetermined amount is a threshold used to determine whether the porosity of the pores of the filter is so high that the likelihood that the nanoparticles included in the PM pass through the filter is high, or the porosity of the pores of the filter is so low that the likelihood that the nanoparticles pass through the filter is low.

When the amount of PM accumulated in the filter, estimated by the PM accumulated amount estimation means, is less than or equal to the predetermined amount, the porosity of pores of the filter is high, and the likelihood that the nanoparticles pass through the filter is high. Therefore, in this case, the temperature of the exhaust gas that flows through the filter is raised. If the temperature of the exhaust gas that flows through the filter rises, the thermal motion of the exhaust gas particles increases, and the Brownian motion of the nanoparticles is promoted. The nanoparticles under promoted Brownian motion are more likely to collide with pore walls in the filter. Thus, the nanoparticles are caused to collide with the pore walls. As a result, the nanoparticles are trapped in the filter.

In the first aspect described above, if the amount of PM accumulated in the filter is equal to or greater than a prescribed amount that is a threshold used to determine whether it is required to remove PM from the filter, a forced recovery control for removing the accumulated PM may be executed ion. In addition, the exhaust gas control apparatus may further include second control means for raising the temperature of the exhaust gas that flows through the filter during a period from when the forced recovery control for the filter is completed until when the amount of PM accumulated in the filter, estimated by the PM accumulated amount estimation means, exceeds the predetermined amount.

The foregoing predetermined amount is the threshold used to determine whether the porosity of the pores of the filter is so high that the likelihood that the nanoparticles included in the PM pass through the filter is high, or the porosity of the pores of the filter is so low that the likelihood that the nanoparticles pass through the filter is low.

In the forced recovery control for the filter, PM is removed from the filter, and the amount of PM accumulated in the filter becomes substantially zero. Therefore, after completion of the forced recovery control, the porosity of the pores of the filter is high and the likelihood that the nanoparticles pass through the filter is high. During a period after completion of the forced recovery control, in which the amount of PM accumulated in the filter, estimated by the PM accumulation amount estimation means, is less than or equal to the predetermined amount, the porosity of the pores of the filter is high and the likelihood that the nanoparticles pass through the filter is high. Therefore, the temperature of the exhaust gas that flows through the filter is raised during the period from when the forced recovery control is completed until when the amount of PM accumulated in the filter, estimated by the PM accumulated amount estimation means, exceeds the predetermined amount. If the temperature of the exhaust gas that flows through the filter rises, the thermal motion of particles of the exhaust gas increases, and the Brownian motion of the nanoparticles is promoted. The nanoparticles under promoted Brownian motion are more likely to collide with pore walls in the filter. Therefore, the nanoparticles are caused to collide with the pore walls in the filter. As a result, the nanoparticles are trapped in the filter.

Examples of the control for raising the temperature of the exhaust gas that flows through the filter include a control of retarding the timing for injecting fuel into the internal combustion engine, a control of performing a post injection of fuel in order to oxidize the fuel in an oxidation catalyst provided in the exhaust passage, at a position upstream of the filter, a control of reducing the opening amount of an exhaust throttle valve provided in the exhaust passage, a control of increasing the amount of EGR gas that is recirculated back to the internal combustion engine, and a control of supplying the fuel to be oxidized in an oxidation catalyst provided in the exhaust passage, at a position upstream of the filter, into the exhaust gas from a fuel supply valve.
A second aspect of the invention relates to an exhaust gas control method for an internal combustion engine. The exhaust gas control method includes: estimating an amount of PM accumulated in a filter that is provided in an exhaust passage of an internal combustion engine and that traps PM in exhaust gas discharged from the internal combustion engine; and raising a temperature of the exhaust gas that flows through the filter if the estimated amount of PM accumulated in the filter is less than or equal to a predetermined amount. The predetermined amount is set such that if the estimated amount of PM accumulated in the filter is less than or equal to the predetermined amount, it is determined that a porosity of pores of the filter is so high that a likelihood that a nanoparticle included in the PM passes through the filter is high, and if the estimated amount of PM accumulated in the filter exceeds the predetermined amount, it is determined that the porosity is so low that the likelihood that the nanoparticle passes through the filter is low.

According to the aspect of the invention, in an exhaust gas control apparatus for an internal combustion engine, nanoparticles are trapped in the filter.

### BRIEF DESCRIPTION OF DRAWINGS

The features, advantages, and technical and industrial significance of this invention will be described below with reference to the accompanying drawings, in which like numerals denote like elements, and wherein:
FIG. 1 is a view schematically showing the structure of an internal combustion engine according to a first embodiment of the invention;
FIG. 2A is a view schematically showing the structure of a DPF according to the first embodiment;
FIG. 2B is an enlarged view of a cross section of a cell wall of the DPF according to the first embodiment;
FIG 3 is a flowchart showing a first nanoparticle trap control routine according to the first embodiment; and
FIG. 4 is a flowchart showing a second nanoparticle trap control routine according to a second embodiment of the invention.

### DETAILED DESCRIPTION OF EMBODIMENTS

Hereinafter, embodiments of the invention will be described.

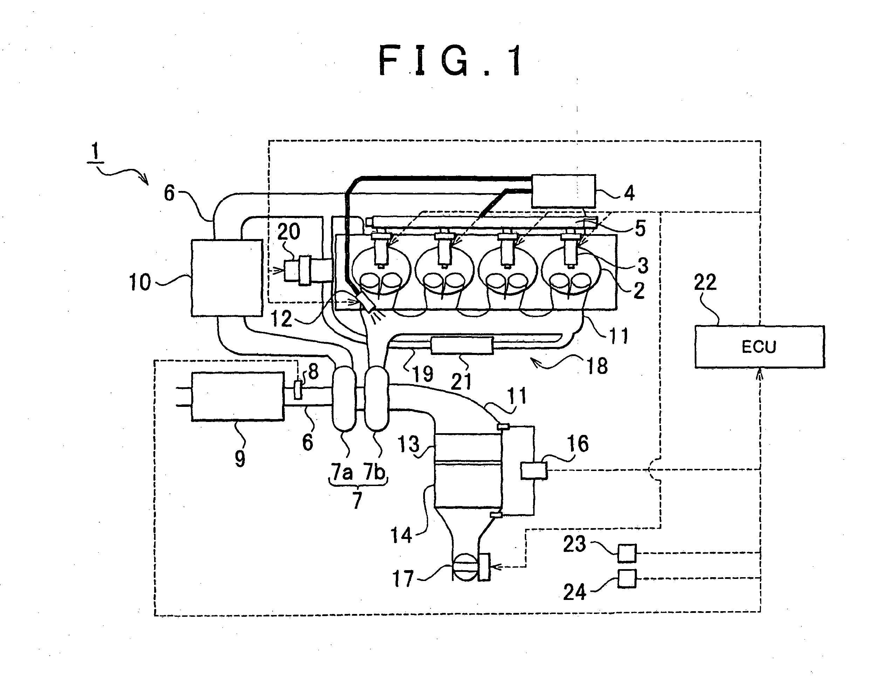

FIG. 1 is a view schematically showing the structure of an internal combustion engine to which an exhaust gas control apparatus for an internal combustion engine according to a first embodiment of the invention is applied. An internal combustion engine 1 shown in FIG. 1 is a water-cooled 4-stroke cycle diesel engine having four cylinders 2. The cylinders 2 and pistons define combustion chambers. The internal combustion engine 1 is mounted in a vehicle. Each cylinder 2 is provided with a fuel injection valve 3. The fuel injection valves 3 are supplied with fuel, such as light oil, that is pumped up from a fuel tank by a supply pump 4 and that is pressurized in a common rail 5 so as to have a predetermined fuel injection pressure. The fuel injection valves 3 inject fuel into the corresponding cylinders 2 in appropriate amounts and at appropriate timing.

An intake passage 6 is connected to the internal combustion engine 1. A compressor 7a of a turbocharger 7 that operates using energy of exhaust gas as a drive power source is provided in the intake passage 6 connected to the internal combustion engine 1. An air flow meter 8 is disposed in the intake passage 6, at a position upstream of the compressor 7a. The air flow meter 8 detects the flow rate of newly-taken air that flows in the intake passage 6. An air cleaner 9 is disposed in the intake passage 6, at a position upstream of the air flow meter 8. The air cleaner 9 removes dust, dirt, etc. from the newly-taken air that is to be taken into the internal combustion engine 1. An intercooler 10 that causes heat exchange between the intake air and external air is provided in the intake passage 6, at a position downstream of the compressor 7a. The intake passage 6 and the devices disposed therein constitute an intake system of the internal combustion engine 1.

An exhaust passage 11 is connected to the internal combustion engine 1. A turbine 7b of the turbocharger 7 is provided in the exhaust passage 11 connected to the internal combustion engine 1. A fuel supply valve 12 that supplies fuel into exhaust gas that flows in the exhaust passage 11 is provided in the exhaust passage 11, at a position upstream of the turbine 7b. The fuel supply valve 12 is supplied with fuel from the fuel tank. An oxidation catalyst 13 is disposed in the exhaust passage 11, at a position downstream of the turbine 7b.

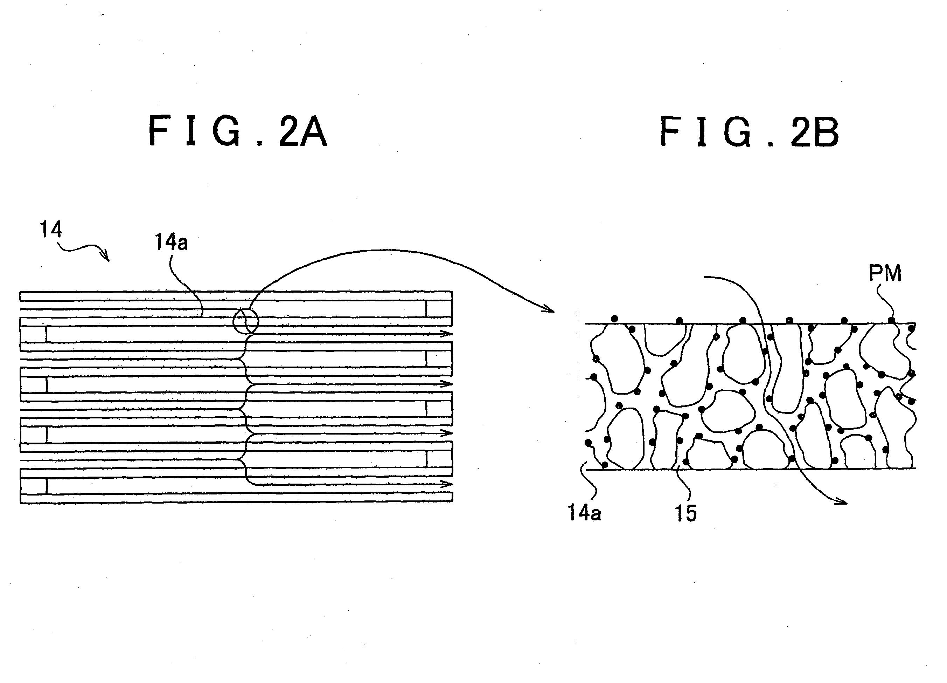

A DPF 14 is disposed at a position downstream of the oxidation catalyst 13. The DPF 14 traps and collects PM in exhaust gas that flows in the exhaust passage 11. The DPF 14 in the first embodiment may be used as a filter-according to the invention. FIG 2A is a view schematically showing the structure of the DPF 14 according to the first embodiment. As shown in FIG. 2A, the DPF 14 is formed of a honeycomb substrate made of a heat-resistant ceramic such as cordierite. In this honeycomb structure, many cells each forming an exhaust gas channel are arranged in such a manner that cells having closed inlet side end portions and cells having closed outlet side end portions are alternately arranged. Cell walls 14a of the DPF 14 have a porous property. FIG 2B is an enlarged view of a cross section of the cell wall 14a of the DPF 14 according to the first embodiment. As shown in FIG 2B, each cell wall 14a has pores 15 that extend through the cell wall 14a. The exhaust gas, after flowing into the DPF 14, flows downstream while passing through the pores 15 of the cell walls 14a. During the passage through the pores 15 of the cell walls 14a, PM moving under Brownian motion in the exhaust gas collides with walls of the pores 15 in the cell walls 14a, and is therefore trapped to accumulate in the pore walls. Besides, PM also collides with the surfaces of the cell walls 14a and therefore is trapped to accumulate therein. The cell walls 14a of the DPF 14 are coated with a NOx storage reduction catalyst.

A differential pressure sensor 16 is provided across the DPF 14. The differential pressure sensor 16 detects the difference between the pressure on the upstream side of the DPF 14 and the pressure on the downstream side of the DPF 14, in order to derive the amount of PM trapped and accumulated in the DPF 14 based on the differential pressure. The differential pressure sensor 16 may be used as PM accumulated amount estimation means according to the invention. An exhaust throttle valve 17 is provided in the exhaust passage 11, at a position downstream of the DPF 14. The exhaust throttle valve 17 is able to adjust the amount of exhaust gas that flows through the exhaust passage 11.

Furthermore, the internal combustion engine 1 is equipped with a high-pressure EGR device 18 that returns (recirculates) a portion of the exhaust gas that flows in the exhaust passage 11 back to the intake passage 6 at high pressure. The exhaust gas recirculated by the high-pressure EGR device 18 is called high-pressure EGR gas. The high-pressure EGR device 18 has a high-pressure EGR passage 19 through which the high-pressure EGR gas flows, a high-pressure EGR valve 20 that adjusts the flow rate of the high-pressure EGR gas that flows through the high-pressure EGR passage 19, and a high-pressure EGR cooler 21 that reduces the temperature of the high-pressure EGR gas. The high-pressure EGR passage 19 connects a portion of the exhaust passage 11, which is on the upstream side of the turbine 7b, to a portion of the intake passage 6, which is on the downstream side of the intercooler 10. Through the high-pressure EGR passage 19, the exhaust gas is introduced at high pressure into the internal combustion engine 1 as the high-pressure EGR gas. The high-pressure EGR valve 20, disposed in the high-pressure EGR passage 19, adjusts the flow rate of the high-pressure EGR gas that flows through the high-pressure EGR passage 19 by adjusting the passage cross-sectional area of the high-pressure EGR passage 19.

The internal combustion engine 1 configured as described above is provided with an electronic control unit (hereinafter, referred to as "ECU") 22 that controls the internal combustion engine 1. The ECU 22 controls the state of operation of the internal combustion engine 1 according to the condition of operation of the internal combustion engine 1 and demands from a driver. The ECU 22 is connected to various sensors, such as the air flow meter 8, the differential pressure sensor 16, a crank position sensor 23 and an accelerator position sensor 24, via electrical wiring. Output signals from these various sensors are input to the ECU 22. Further, the ECU 22 is connected to various actuators, such as the fuel injection valves 3, the fuel supply valve 12, the exhaust throttle valve 17 and the high-pressure EGR valve 20, via electrical wiring. The ECU 22 controls these devices. The ECU 22 determines the state of operation of the internal combustion engine 1 upon reception of the output signals from the crank position sensor 23, the accelerator position sensor 24, etc., and then electrically controls the internal combustion engine 1 and the foregoing devices on the basis of the determined state of operation.

For example, the ECU 22 performs a control for removing the PM accumulated in the DPF 14 (hereinafter, referred to as "forced recovery control"), besides various known controls such as the fuel injection control. Specifically, the forced recovery control for the DPF 14 is performed in the following manner. That is, when the amount of PM accumulated in the DPF 14 becomes equal to or greater than a threshold used to determine whether the PM needs to be removed, fuel is supplied to the oxidation catalyst 13 disposed on the upstream side of the DPF 14 or to the NOx storage reduction catalyst of the DPF 14, by supplying fuel from the fuel supply valve 12 into exhaust gas, or performing a post-injection of fuel into the internal combustion engine 1 in addition to the main injection. Thus, the oxidation reaction of the fuel raises the temperature of the DPF 14 to, for example, 600°C, whereby the PM trapped in the DPF 14 is oxidized and removed.

In the DPF 14, the PM that is larger than 50 nm collides with the surfaces of the cell walls 14a and the walls of pores in the cell walls 14a, whereby the PM is trapped. However, a nanoparticle, which is included in the PM and of which the size is equal to or less than 50 nm, moves in the DPF 14 along with a stream of exhaust gas, and the likelihood that the nanoparticle collides with the surfaces of the cell walls 14a is low. When PM has not accumulated in the pores 15 in the cell walls 14a, that is, when the porosity of the pores 15 is high, the likelihood that the nanoparticles collide with the pore walls is low, but the nanoparticles are highly likely to pass through the DPF 14. On the other hand, when the porosity of the pores 15 becomes low due to accumulation of PM in the pores 15 in the cell walls 14a, the nanoparticles easily collide with the pore walls, and are therefore trapped in the DPF 14. As described above, there is a problem that the nanoparticles pass through the DPF 14 without being trapped when the porosity of the pores 15 in the cell walls 14a is high, according to the related art.

Therefore, in the first embodiment, when the amount of PM accumulated in the DPF 14, estimated based on the value output from the differential pressure sensor 16, is less than or equal to a predetermined amount, the temperature of the exhaust gas that flows through the DPF 14 is raised so as to promote the Brownian motion of the nanoparticles in the DPF 14. The predetermined amount is a threshold used to determine whether the porosity of the pores 15 in the cell walls 14a of the DPF 14 is so high that the likelihood that the nanoparticles included in the PM pass through the DPF 14 is high, or the porosity of the pores 15 in the cell walls 14a of the DPF 14 is so low that the likelihood that the nanoparticles pass through the DPF 14 is low.

The foregoing predetermined amount is the threshold used to determine whether the porosity of the pores 15 in the cell walls 14a of the DPF 14 is so high that the likelihood that the nanoparticles included in the PM pass through the DPF 14 is high or the porosity of the pores 15 in the cell walls 14a of the DPF 14 is so low that the likelihood that the nanoparticles pass through the DPF 14 is low. If the estimated amount of PM accumulated in the DPE 14 is less than or equal to the predetermined amount, it is determined that the porosity of the pores 15 in the cell walls 14a of the DPF 14 is so high that the likelihood that the nanoparticles included in the PM pass through the DPF 14 is high.

When the amount of PM accumulated in the DPF 14, estimated based on the value output from the differential pressure sensor 16, is less than or equal to the predetermined amount, a sufficient amount of PM has not been accumulated in the DPF 14 and therefore the porosity of the pores 15 in the cell walls 14a of the DPF 14 is so high that the likelihood that the nanoparticles pass through the DPF 14 is high. Therefore, in this case, the temperature of the exhaust gas that flows through the DPF 14 is raised according to the first embodiment. If the temperature of the exhaust gas that flows through the DPF 14 rises, the thermal motion of particles of the exhaust gas increases, and the Brownian motion of the nanoparticles is promoted. The nanoparticles under promoted Brownian motion are more likely to collide with pore walls in the cell walls 14a of the DPF 14. Therefore, the nanoparticles collide with and are trapped in the pore walls within the cell walls 14a of the DPF 14. In the first embodiment, because what is performed for the foregoing control is just raising the temperature of the exhaust gas that flows through the DPF 14, it is possible to realize this control while using the same components as those in the related art. Therefore, because the nanoparticles are trapped in the DPF 14 with the use of the same components as those in the related art, it is possible to avoid an increase in the number of components, reduction in efficiency in mounting an exhaust gas control apparatus in a vehicle and an increase in the cost which will very likely result from the use of newly designed components. Thus, the apparatus according to the invention is easily applied to small vehicles as well.

Examples of the control for raising the temperature of the exhaust gas that flows through the DPF 14 include a control of retarding the timing for injecting fuel into the internal combustion engine 1, a control of performing a post injection of fuel in order to oxidize the fuel in the oxidation catalyst 13, a control of reducing the opening amount of the exhaust throttle valve 17 provided in the exhaust passage 11, a control of increasing the amount of the high-pressure EGR gas that is recirculated back to the internal combustion engine 1, and a control of supplying the fuel to be oxidized in the oxidation catalyst 13 into the exhaust gas from the fuel supply valve 12.

If the timing for injecting the fuel into the internal combustion engine 1 is retarded, the proportion of a portion of the combustion energy, which is used for the work of pushing the piston down, decreases, and the temperature of the exhaust gas discharged from the internal combustion engine 1 rises. If the fuel is supplied through the post-injection or from the fuel supply valve 12, the fuel reaches the oxidation catalyst 13 and produces heat by the oxidation reaction. Therefore, the temperature of the exhaust gas that flows through a portion of the DPF 14, which is located downstream of the oxidation catalyst 13, rises. When the fuel is supplied from the fuel supply valve 12, the state of combustion of the internal combustion engine 1 is not affected, and the fuel economy deterioration is minimized. When the opening amount of the exhaust throttle valve 17 is reduced, the engine load of the internal combustion engine 1 increases and therefore the temperature of the exhaust gas discharged from the internal combustion engine 1 rises. When the amount of the high-pressure EGR gas is increased, the high-pressure EGR gas at high temperature is supplied to the internal combustion engine 1. Therefore, the temperature of the exhaust gas discharged from the internal combustion engine 1 rises.

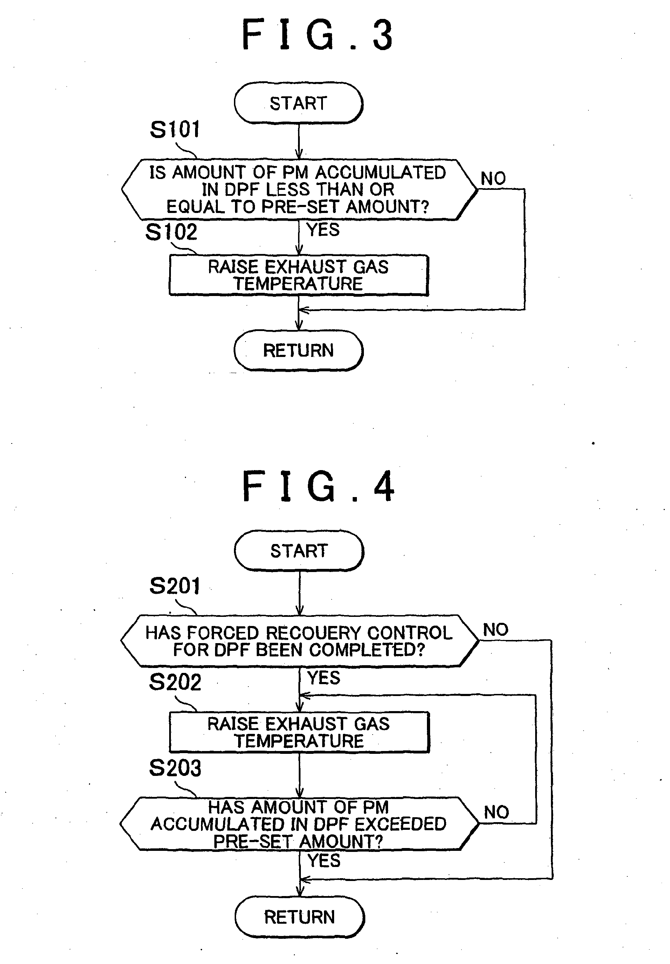

A first nanoparticle trap control routine for trapping nanoparticles in the DPF 14 will be described with reference to a flowchart shown in FIG. 3. The flowchart in FIG. 3 shows the first nanoparticle trap control routine. This routine is executed by the ECU 22 periodically at predetermined intervals. The ECU 22 that executes this routine may be used as first control means.

When the routine shown in FIG. 3 starts, the ECU 22 determines in S101 whether the amount of PM accumulated in the DPF 14, estimated based on the value output from the differential pressure sensor 16, is less than or equal to a predetermined amount. The amount of PM accumulated in the DPF 14 is estimated, for example, by integrating the value output from the differential pressure sensor 16 and calculating an average value under a condition that the amount of change in the vehicle speed is less than or equal to a predetermined value, for example, a condition that the amount of change in the vehicle speed for 5 seconds is within a range of ± 2 km/h with respect to 50 km/h. If it is determined in S101 that the amount of PM accumulated in the DPF 14 is less than or equal to the predetermined amount, the process proceeds to S102. If it is determined in S101 that the PM accumulated amount is larger than the predetermined amount, the present execution of this routine ends.

In S102, the temperature of the exhaust gas that flows through the DPF 14 is raised. More specifically, a control, for example, retardation of the timing for injecting the fuel into the internal combustion engine 1, post-injection of fuel, reduction of the opening amount of the exhaust throttle valve 17, increase in the amount of the high-pressure EGR gas, or supply of the fuel from the fuel supply valve 12, is performed. The degree of the increase in the temperature of the exhaust gas is set such that the temperature of the exhaust gas is made higher than or equal to the temperature at which the Brownian motion of the nanoparticles in the DPF 14 is promoted. Therefore, when the temperature of the exhaust gas is raised, a target temperature to which the temperature of the exhaust gas should be raised may be set, or a control amount for a control object may be set according to the temperature of the exhaust gas. After completion of the process of this step, the present execution of this routine ends.

By executing the foregoing routine, the temperature of the exhaust gas that flows through the DPF 14 is raised when the amount of PM accumulated in the DPF 14 is less than or equal to the predetermined amount. Therefore, even when the amount. of PM accumulated in the DPF 14 is less than or equal to the predetermined amount, the nanoparticles are caused to collide with the pore walls in the cell walls 14a by promoting the Brownian motion of the nanoparticles. As a result, the nanoparticles are trapped in the DPF 14.

Hereinafter, a second embodiment of the invention will be described. If a forced recovery control is performed on the DPF 14, the PM accumulated amount decreases. The forced recovery control increases the likelihood that the nanoparticles pass through the DPF 14. Therefore, in the second embodiment, after the forced recovery control is performed on the DPF 14, the temperature of the exhaust gas that passes through the DPF 14 is raised so as to promote the Brownian motion of the nanoparticles in the DPF 14 until the amount of PM accumulated in the DPF 14, estimated based on the value output from the differential pressure sensor 16, exceeds the predetermined amount. The predetermined amount is the threshold used to determine whether the porosity of the pores 15 in the cell walls 14a of the DPF 14 is so high that the likelihood that the nanoparticles pass through the DPF 14 is high, or the porosity of the pores 15 in the cell walls 14a of the DPF 14 is so low that the likelihood that the nanoparticles pass through the DPF 14 is low.

The foregoing predetermined amount is the threshold used to determine whether the porosity of the pores 15 in the cell walls 14a of the DPF 14 is so high that the likelihood that the nanoparticles included in the PM pass through the DPF 14 is high or the porosity of the pores 15 in the cell walls 14a of the DPF 14 is so low that the likelihood that the nanoparticles pass through the DPF 14 is low. If the estimated amount of PM accumulated in the DPE 14 exceeds the predetermined amount, it is determined that the porosity of the pores 15 in the cell walls 14a of the DPF 14 is so low that the likelihood that the nanoparticles included in the PM pass through the DPF 14 is low.

In the forced recovery control for the DPF 14, PM is removed from the DPF 14. Therefore, after completion of the forced recovery control, the porosity of the pores 15 in the cell walls 14a of the DPF 14 is so high that the likelihood that the nanoparticles pass through the DPF 14 is high. In a subsequent period in which the PM accumulated amount, estimated based on the value output from the differential pressure sensor 16, continues to be less than or equal to the predetermined amount, the porosity of the pores 15 in the cell walls 14a of the DPF 14 is so high that the likelihood that the nanoparticles pass through the DPF 14 is high. Therefore, in the second embodiment, the temperature of the exhaust gas that flows through the DPF 14 is raised during the period from when the forced recovery control is completed until when the PM accumulated amount, estimated based on the value output from the differential pressure sensor 16, exceeds the predetermined amount. If the temperature of the exhaust gas that flows through the DPF 14 rises, the thermal motion of particles of the exhaust gas increases, and the Brownian motion of the nanoparticles is promoted. The nanoparticles under promoted Brownian motion are more likely to collide with pore walls in the cell walls 14a of the DPF 14. Therefore, the nanoparticles are caused to collide with the pore walls within the cell walls 14a of the DPF 14, whereby the nanoparticles are trapped in the DPF 14. In the second embodiment as well, because what is performed for the foregoing control is just raising the temperature of the exhaust gas that flows through the DPF 14, it is possible to realize this control while using the same components as those in the related art. Therefore, because it is possible to trap the nanoparticles in the DPF 14 while using the same components as those in the related art, it is possible to avoid an increase in the number of components, reduction in efficiency in mounting an exhaust gas control apparatus in a vehicle and an increase in the cost which will very likely result from the use of newly designed components. Thus, the apparatus according to the invention is easily applied to small vehicles as well.

A second nanoparticle trap control routine for trapping nanoparticles in the DPF 14 after completion of the forced recovery will be described with reference to a flowchart shown in FIG. 4. The flowchart shown in FIG 4 is the second nanoparticle trap control routine. This routine is executed by the ECU 22 periodically at predetermined intervals. The ECU 22 that executes this routine may be used as second control means according to the invention.

When the routine shown in FIG. 4 starts, it is determined in S201 whether the forced recovery control for the DPF 14 has been completed. If it is determined in S201 that the forced recovery control has been completed, the process proceeds to S202. If it is determined in S201 that the forced recovery control has not been completed, the present execution of this routine ends.

In S202, the temperature of the exhaust gas that flows through the DPF 14 is raised. More specifically, a control, for example, retardation of the timing for injecting the fuel into the internal combustion engine 1, post-injection of fuel, reduction of the opening amount of the exhaust throttle valve 17, increase in the amount of the high-pressure EGR gas, or supply of the fuel from the fuel supply valve 12, is performed. The degree of the increase in the temperature of the exhaust gas is set such that the temperature of the exhaust gas is made higher than or equal to the temperature at which the Brownian motion of the nanoparticles in the DPF 14 is promoted. Therefore, when the temperature of the exhaust gas is raised, a target temperature to which the temperature of the exhaust gas should be raised may be set, or a control amount for a control object may be set according to the temperature of the exhaust gas.

In S203, it is determined whether the amount of PM accumulated in the DPF 14, estimated based on the value output from the differential pressure sensor 16, has exceeded a predetermined amount. If it is determined in S203 that the amount of PM accumulated in the DPF 14 has exceeded the predetermined amount, the present execution of this routine ends. If it is determined in S203 that the amount of PM accumulated in the DPF 14 has not exceeded the predetermined amount, the process returns to S202.

By executing the foregoing routine, the temperature of the exhaust gas that flows through the DPF 14 is raised during the period from when the forced recovery control of the DPF 14 is completed until when the PM accumulated amount exceeds the predetermined amount. Therefore, even during the period from when the forced recovery control of the DPF 14 is completed until when the PM accumulated amount exceeds the predetermined amount, the nanoparticles are caused to collide with the pore walls in the cell walls 14a by promoting the Brownian motion of the nanoparticles. As a result, the nanoparticles are trapped in the DPF 14.

The exhaust gas control apparatus for an internal combustion engine according to the invention is not limited to those in the foregoing embodiments, but may be realized with various modifications or changes made without departing from the scope of the appended claims.

For example, the PM accumulated amount estimation means may also be means other than a differential pressure sensor. More specifically, the PM accumulated amount estimation means may be means for estimating the amount of PM accumulated in the DPF based on the state of operation of the internal combustion engine, or means for estimating the amount of PM accumulated in the DPF based on the value output from a PM sensor that is disposed in the exhaust passage, at a position upstream of the DPF.

## Claims

1. An exhaust gas control apparatus for an internal combustion engine comprising:
a filter (14) that is provided in an exhaust passage (11) of an internal combustion engine (1) and that traps PM in exhaust gas discharged from the internal combustion engine; and
PM accumulated amount estimation means (16) for estimating an amount of PM accumulated an the filter; the exhaust gas control apparatus **characterized by** comprising:
first control means (22) for raising a temperature of the exhaust gas that flows through the filter if the amount of PM accumulated in the filter, estimated by the PM accumulated amount estimation means, is less than or equal to a predetermined amount,
wherein the predetermined amount is set such that if the estimated amount of PM accumulated in the filter is less than or equal to the predetermined amount, it is determined that a porosity of pores of the filter is so high that a likelihood that a nanoparticle included in the PM passes through the filter is high, and if the estimated amount of PM accumulated in the filter exceeds the predetermined amount, it is determined that the porosity is so low that the likelihood that the nanoparticle passes through the filter is low.

2. The exhaust gas control apparatus according to claim 1, wherein:
a forced recovery control for removing the accumulated PM is executed on the filter, if the amount of PM accumulated in the filter is equal to or greater than a prescribed amount that is a threshold used to determine whether it is required to remove PM from the filter; and
the exhaust gas control apparatus further comprises second control means (22) for raising the temperature of the exhaust gas that flows through the filter during a period from when the forced recovery control for the filter is completed until when the amount of PM accumulated in the filter, estimated by the PM accumulated amount estimation means, exceeds the predetermined amount.

3. An exhaust gas control method for an internal combustion engine, **characterized by** comprising:
estimating an amount of PM accumulated in a filter that is provided in an exhaust passage of an internal combustion engine and that traps PM in exhaust gas discharged from the internal combustion engine; and
raising a temperature of the exhaust gas that flows through the filter if the estimated amount of PM accumulated in the filter is less than or equal to a predetermined amount,
wherein the predetermined amount is set such that if the estimated amount of PM accumulated in the filter is less than or equal to the predetermined amount, it is determined that a porosity of pores of the filter is so high that a likelihood that a nanoparticle included in the PM passes through the filter is high, and if the estimated amount of PM accumulated in the filter exceeds the predetermined amount, it is determined that the porosity is so low that the likelihood that the nanoparticle passes through the filter is low.

4. The exhaust gas control method according to claim 3, further comprising:
executing a forced recovery control for removing the accumulated PM on the filter if the amount of PM accumulated in the filter is equal to or greater than a prescribed amount that is a threshold used to determine whether it is required to remove PM from the filter, wherein
the temperature of the exhaust gas that flows through the filter is raised during a period from when the forced recovery control for the filter is completed until when the estimated amount of PM accumulated in the filter exceeds the predetermined amount.

## Patentansprüche

1. Abgassteuervorrichtung für eine Maschine mit interner Verbrennung mit:
einem Filter (14), der in einem Abgasdurchlass (11) einer Maschine (1) mit interner Verbrennung angeordnet ist und der PM im Abgas einfängt, das von der Maschine mit interner Verbrennung abgegeben wird; und
einer Einrichtung (16) zum Abschätzen der Menge des in dem Filter gesammeltem PM; wobei die Abgassteuervorrichtung **dadurch gekennzeichnet ist, dass** sie Folgendes aufweist:
eine erste Steuereinrichtung (22) zum Erhöhen einer Temperatur des Abgases, das durch den Filter fließt, wenn die Menge des in dem Filter gesammelten PM, die von der Einrichtung zum Abschätzen der Menge des in dem Filter gesammelten PM abgeschätzt wird, kleiner oder gleich einer vorab festgelegten Menge ist,
wobei die vorab festgelegte Menge so eingestellt ist, dass bestimmt wird, dass eine Durchlässigkeit von Poren des Filters so hoch ist, dass eine Wahrscheinlichkeit hoch ist, dass in dem PM enthaltene Nanopartikel durch den Filter gehen, wenn die abgeschätzte Menge des in dem Filter gesammelten PM kleiner oder gleich der vorab festgelegten Menge ist, und bestimmt wird, dass die Durchlässigkeit so niedrig ist, dass die Wahrscheinlichkeit gering ist, dass die Nanopartikel durch den Filter gehen, wenn die abgeschätzte Menge des in dem Filter gesammelten PM die vorab festgelegte Menge übersteigt.

2. Abgassteuervorrichtung nach Anspruch 1, wobei:
eine Zwangsregenerierungssteuerung zum Entfernen des gesammelten PM für den Filter durchgeführt wird, wenn die Menge des in dem Filter gesammelten PM gleich oder größer als eine vorbestimmte Menge ist, die ein Schwellenwert ist, der verwendet wird, um zu bestimmen, ob es nötig ist, PM aus dem Filter zu entfernen; und
die Abgassteuervorrichtung weiterhin eine zweite Steuereinrichtung (22) umfasst, um die Temperatur das Abgases zu erhöhen, das während eines Zeitabschnitts durch den Filter fließt, der an dem Zeitpunkt beginnt, an dem die Zwangsregenerierungssteuerung für den Filter abgeschlossen ist, und bis zu dem Zeitpunkt andauert, an dem die Menge des in dem Filter gesammeltem PM, die von der Einrichtung zum Abschätzen der Menge des in dem Filter gesammelten PM abgeschätzt wurde, die vorab festgelegte Menge übersteigt.

3. Abgassteuerverfahren für eine Maschine mit interner Verbrennung,
**dadurch gekennzeichnet, dass** es folgende Schritte umfasst:
Abschätzen einer Menge von in einem Filter gesammeltem PM, wobei der Filter in einem Abgasdurchlass einer Maschine mit interner Verbrennung (1) angeordnet ist und PM im Abgas einfängt, das von der Maschine mit interner Verbrennung abgegeben wird; und
Erhöhen einer Temperatur des Abgases, das durch den Filter fließt, wenn die abgeschätzte Menge des in dem Filter gesammelten PM kleiner oder gleich einer vorab festgelegten Menge ist,
wobei die vorab festgelegte Menge so eingestellt ist, dass bestimmt wird, dass eine Durchlässigkeit von Poren des Filters so hoch ist, dass eine Wahrscheinlichkeit hoch ist, dass in dem PM enthaltene Nanopartikel durch den Filter gehen, wenn die abgeschätzte Menge des in dem Filter gesammelten PM kleiner oder gleich der vorab festgelegten Menge ist, und bestimmt wird, dass die Durchlässigkeit so niedrig ist, dass die Wahrscheinlichkeit gering ist, dass die Nanopartikel durch den Filter gehen, wenn die abgeschätzte Menge des in dem Filter gesammelten PM die vorab festgelegte Menge übersteigt.

4. Abgassteuerverfahren nach Anspruch 3, weiter mit den folgenden Schritten:
Ausführen einer Zwangsregenerierungssteuerung zum Entfernen des auf dem Filter gesammelten PM, wenn die Menge des in dem Filter gesammelten PM gleich oder größer als eine vorbestimmte Menge ist, die ein Schwellenwert ist, der verwendet wird, um zu bestimmen, ob es nötig ist, PM aus dem Filter zu entfernen, wobei
die Temperatur das Abgases erhöht wird, das während eines Zeitabschnitts durch den Filter fließt, der an dem Zeitpunkt beginnt, an dem die Zwangsregenerierungssteuerung für den Filter abgeschlossen ist, und bis zu dem Zeitpunkt andauert, an dem die abgeschätzte Menge des in dem Filter gesammelten PM die vorab festgelegte Menge übersteigt.

## Revendications

1. Dispositif de commande de gaz d'échappement pour un moteur à combustion interne, comprenant :
un filtre (14) qui est disposé dans un conduit d'échappement (11) du moteur à combustion interne (1) et qui piège des substances solides (PM pour "Particulate Matter") dans les gaz d'échappement évacués du moteur à combustion interne ; et
un moyen (16) d'estimation de quantité de PM accumulées destiné à estimer une quantité de PM accumulées dans le filtre, le dispositif de commande gaz d'échappement étant **caractérisé en ce qu'**il comprend :
un premier moyen de commande (22) destiné à élever la température des gaz d'échappement qui s'écoulent à travers le filtre si la quantité de PM accumulées dans le filtre, estimée par le moyen d'estimation de quantité de PM accumulées, est inférieure ou égale à une quantité prédéterminée,
dans lequel la quantité prédéterminée est fixée de façon que si la quantité estimée de PM accumulées dans le filtre est inférieure ou égale à la quantité prédéterminée, on détermine que la porosité des pores du filtre est si grande que la probabilité pour qu'une nanoparticule incluse dans les PM passe à travers le filtre est élevée, et que si la quantité estimée de PM accumulées dans le filtre excède la quantité prédéterminée, on détermine que la porosité est si faible que la probabilité pour que la nanoparticule passe à travers le filtre est basse.

2. Dispositif de commande de gaz d'échappement selon la revendication 1,
dans lequel une commande de récupération forcée destinée à éliminer les PM accumulées est effectuée sur le filtre, si la quantité de PM accumulées dans le filtre est égale ou supérieure à une quantité imposée qui est un seuil utilisé pour déterminer s'il est nécessaire d'éliminer les PM du filtre, et
dans lequel le dispositif de commande de gaz d'échappement comprend en outre un second moyen de commande (22) destiné à élever la température des gaz d'échappement qui s'écoulent à travers le filtre durant une période allant du moment où la commande de récupération forcée pour le filtre est terminée jusqu'au moment où la quantité de PM accumulées dans le filtre, estimée par le moyen d'estimation de quantité de PM accumulées, excède la quantité prédéterminée.

3. Procédé de commande de gaz d'échappement pour un moteur à combustion interne, **caractérisé en ce qu'**il comprend :
l'estimation d'une quantité de PM accumulées dans un filtre qui est disposé dans un conduit d'échappement du moteur à combustion interne et qui piège des PM dans les gaz d'échappement évacués du moteur à combustion interne ; et
l'élévation de la température des gaz d'échappement qui s'écoulent à travers le filtre si la quantité estimée de PM accumulées dans le filtre est inférieure ou égale à une quantité prédéterminée,
dans lequel la quantité prédéterminée est fixée de façon que si la quantité estimée de PM accumulées dans le filtre est inférieure ou égale à la quantité prédéterminée, on détermine que la porosité des pores du filtre est si grande que la probabilité pour qu'une nanoparticule incluse dans les PM passe à travers le filtre est élevée, et que si la quantité estimée de PM accumulées dans le filtre excède la quantité prédéterminée, on détermine que la porosité est si faible que la probabilité pour que la nanoparticule passe à travers le filtre est basse.

4. Procédé de commande de gaz d'échappement selon la revendication 3, comprenant en outre :
l'exécution, sur le filtre, d'une commande de récupération forcée destinée à éliminer les PM accumulées, si la quantité de PM accumulées dans le filtre est égale ou supérieure à une quantité imposée qui est un seuil utilisé pour déterminer s'il est nécessaire d'éliminer les PM du filtre, et
dans lequel on élève la température des gaz d'échappement qui s'écoulent à travers le filtre durant une période allant du moment où la commande de récupération forcée pour le filtre est terminée jusqu'au moment où la quantité estimée de PM accumulées dans le filtre excède la quantité prédéterminée.
